# EUROPEAN PATENT SPECIFICATION

(11) **EP 4 614 625 B1**
(45) Date of publication and mention of the grant of the patent: **05.08.2026**
(21) Application number: 25153813.8
(22) Date of filing: 24.01.2025
(51) Int. Cl.: H01M 4/62, H01M 10/0525, H01M 4/02, H01M 4/133, H01M 4/505, H01M 4/525, H01M 4/583, H01M 4/66

(54) **ELECTRODE, BATTERY, AND POWER CONSUMING DEVICE**
ELEKTRODE, BATTERIE UND STROMVERBRAUCHENDE VORRICHTUNG
ÉLECTRODE, BATTERIE ET DISPOSITIF DE CONSOMMATION D'ÉNERGIE

(30) Priority: 05.03.2024 CN 202410250903
(43) Date of publication of application: 10.09.2025
(73) Proprietor: Hithium Tech HK Limited, Hong Kong (HK)
(72) Inventor: LIAO, Linping, Xiamen, 361100 (CN)
(74) Representative: Santarelli

(56) References cited:
- EP-A1- 3 104 445
- EP-A1- 4 175 047
- EP-A2- 3 660 957

## Description

### TECHNICAL FIELD

This disclosure relates to the field of battery technology, and in particular to an electrode, a battery, and a power consuming device.

### BACKGROUND

During charging and discharging of batteries, active ions in the electrolyte infiltrate into electrode materials of electrodes and then react with active substances therein, thereby releasing electrons. If the infiltrability of the electrode for the electrolyte is poor, it may result in electrolyte loss or uneven distribution during charging and discharging, subsequently affecting the energy efficiency and cycle capacity retention rate of the battery. Therefore, improvement of the electrolyte retention capability of the electrode is one of the key approaches to improvement of the battery performance.

EP 3 660 957 A2 relates to a solid state battery provided with an electrode active material layer including a negative electrode active material, a solid electrolyte and a conductive material, wherein the negative electrode active material includes a carbonaceous material and the carbonaceous material includes a plurality of pores, a porosity of 10-60 vol%, and a pore size of 100-300 nm based on the largest diameter of the pores.

EP 4 175 047 A1 relates to a separator including: a porous polymer substrate having a plurality of pores; and a porous coating layer disposed on at least one surface of the porous polymer substrate and including a plurality of core-shell type polymer particles, wherein the core-shell type polymer particles have a core portion including a super-absorbent polymer, and a shell portion surrounding the core portion and including a low-absorbent polymer having a melting point of 80°C or higher.

EP 3 104 445 A1 relates to a non-aqueous electrolyte secondary battery comprising a positive electrode having a positive electrode active material layer, a negative electrode having a negative electrode active material layer, and an electrolyte layer having an electrolyte solution containing a non-aqueous solvent, wherein at least one of the positive electrode active material layer and the negative electrode active material layer contains an electrode material for a non-aqueous electrolyte secondary battery having a core part including an electrode active material and a shell part including a conductive material in a base material formed by a gel-forming polymer having a liquid absorption rate with respect to the electrolyte solution of 10 to 200%.

### SUMMARY

The invention is defined by the independent claims.

The present disclosure provides an electrode, a battery, and a power consuming device in which the electrode has a good electrolyte retention performance.

In the present disclosure, the electrode includes the current collector layer and the active layer that are stacked, and the active layer is disposed on the surface of the current collector layer. Therefore, the current collector layer can carry the active layer and collect and output currents generated by the active particles, thereby realizing the concentration and transmission of the currents. In the present disclosure, the active layer includes the active particles and the electrolyte retention particles. Each electrolyte retention particle includes the core and the shell coating the core. The shell is composed of the multiple sub-particles that are jointed together. Each sub-particle has the capillary pores. When the electrode is assembled into the battery, each capillary pore can absorb electrolyte, so that the shell of the electrolyte retention particle has multiple "antennae", that is, the capillary pore of the shell acts like a straw to absorb the electrolyte and store the electrolyte on the core. Therefore, the electrolyte retention particles have a high electrolyte retention performance, and the storage capacity of the electrode for the electrolyte is improved, so that the electrode has a good infiltrability for the electrolyte. When the battery is charged or discharged, the active particles in the electrode can be in effective contact with the electrolyte. The active ions in the electrolyte can react chemically with the active particles in the active layer and then release electrons. Therefore, the electrode has the good electrolyte retention performance, thereby improving the cycle performance and energy efficiency of the battery when the electrode is applied to the battery.

### BRIEF DESCRIPTION OF THE DRAWINGS

FIG. 1 is a schematic structural view of an electrolyte retention particle according to an embodiment of the present disclosure.
FIG. 2 is a schematic structural view of a sub-particle according to an embodiment of the present disclosure.
FIG. 3 is a schematic structural view of an electrode according to an embodiment of the present disclosure.
FIG. 4 is an electron microscope image of an electrode according to an embodiment of the present disclosure.
FIG. 5 is a schematic structural view of a battery according to an embodiment of the present disclosure.
FIG. 6 is a block view of a circuit of a power consuming device according to an embodiment of the present disclosure.
FIG. 7 is a schematic structural view of a power consuming device according to an embodiment of the present disclosure.

Description of reference signs of the accompanying drawings: 100 - electrolyte retention particle, 110 - core, 120 - shell, 121 - sub-particle, 122 - capillary pore, 200 - electrode, 210 - current collector layer, 220 - active layer, 300 - battery, 310 - positive electrode, 320 - separator, 330 - negative electrode, 340 - electrolyte, 400 - power consuming device, 410 - device body, 500 - active particle.

### DETAILED DESCRIPTION

During charging and discharging of a battery, active ions in an electrolyte infiltrate into an electrode material of an electrode, and react with active substances therein, thereby releasing electrons. If an infiltrability of the electrode for the electrolyte is poor, it may result in electrolyte lost or unevenly distribution during charging and discharging, subsequently affecting the energy efficiency and cycle capacity retention rate of the battery. Therefore, improvement of the electrolyte retention capability of the electrode is one of the key approaches to improvement of the battery performance.

Commonly, the porosity of the electrode is increased by means such as increasing the pressure of the roller to improve the electrolyte retention capability of the electrode. However, it is difficult to uniformly control the pore size, leading to poor stability of the electrodes between batches. In addition, high-swelling binders are added to the electrode to define more channels, thereby improving the electrolyte retention capability. However, excessive swelling may increase internal stress in the battery, which is detrimental to the subsequent cycle of the battery.

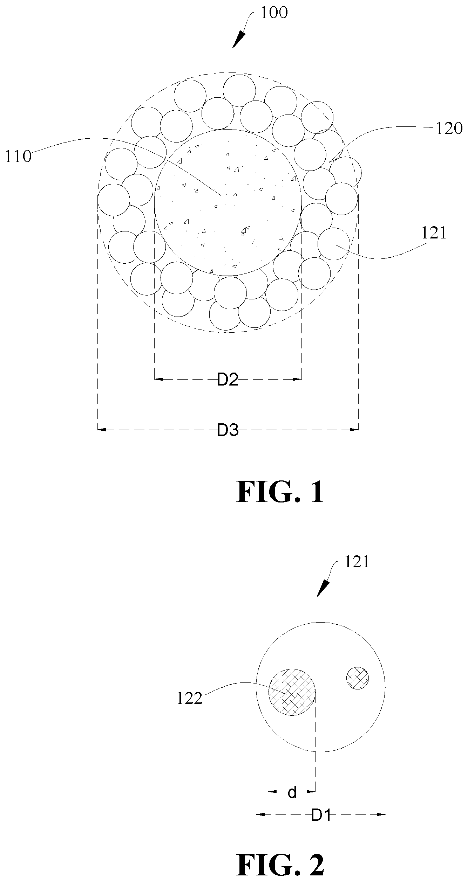

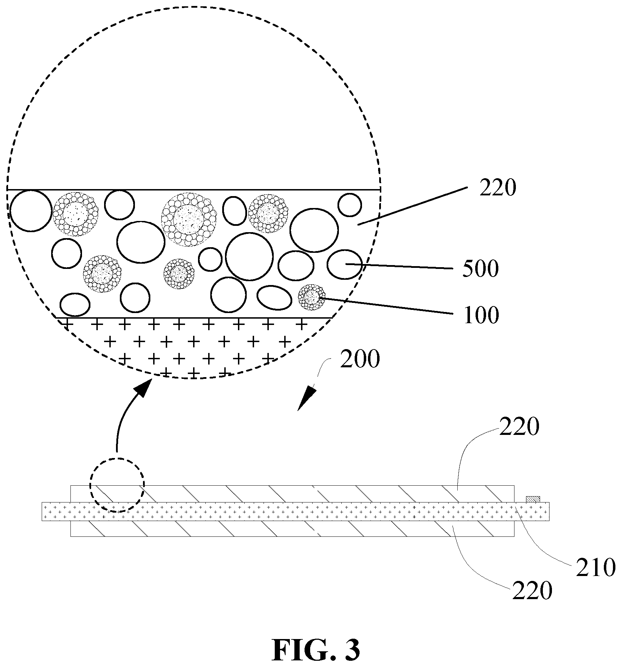

As illustrated in FIG. 1 to FIG. 4, an electrode 200 is provided in the present disclosure. The electrode 200 includes a current collector layer 210 and an active layer 220. The active layer 220 is disposed on a surface of the current collector layer 210. The active layer 200 includes active particles 500 and electrolyte retention particles 100. Each of the electrolyte retention particles 100 includes a core 110 and a shell 120. The core 110 is coated with the shell 120. The shell 120 includes multiple sub-particles 121. Each of the multiple sub-particles 121 has capillary pores 122.

It may be understood that, the active layer 220 and the current collector layer 210 are stacked.

Alternatively, the electrode 200 may be a positive electrode 310 or a negative electrode 330.

Alternatively, in some embodiments, the active layer 220 is disposed on one surface of the current collector layer 210. In other embodiments, two active layers 220 are respectively disposed on two opposite surfaces of the current collector layer 210.

It may be understood that, the electrolyte retention particles 100 is applied to the electrode 200 assembled into the battery 300. The battery 300 includes the electrode 200 and an electrolyte 340. At least a part of the electrode 200 in immersed in the electrolyte 340.

It may be understood that, the electrolyte retention particle 100 has a core-shell structure.

In this embodiment, the electrode 200 includes the current collector layer 210 and the active layer 220 that are stacked, and the active layer 220 is disposed on the surface of the current collector layer 210. Therefore, the current collector layer 210 can carry the active layer 220 and collect and output currents generated by the active particles 500, thereby realizing the concentration and transmission of the currents. In this embodiment, the active layer 220 includes the active particles 500 and the electrolyte retention particles 100. Each electrolyte retention particle 100 includes the core 110 and the shell 120 coating the core 110. The shell 120 is composed of the multiple sub-particles 121 that are jointed together. Each sub-particle 121 has the capillary pores 122. When the electrode 200 is assembled into the battery 300, each capillary pore 122 can absorb electrolyte 340, so that the shell 120 of the electrolyte retention particle has multiple "antennae", that is, the capillary pore 122 of the shell 120 acts like a straw to absorb the electrolyte 340 and store the electrolyte on the core 110. Therefore, the electrolyte retention particles 100 have a high electrolyte retention performance, and the storage capacity of the electrode for the electrolyte is improved, so that the electrode 200 has a good infiltrability for the electrolyte. When the battery 300 is charged or discharged, the active particles 500 in the electrode 200 can be in effective contact with the electrolyte 340. The active ions in the electrolyte 340 can react chemically with the active particles 500 in the active layer 220 and then release electrons. Therefore, the electrode 200 has the good electrolyte retention performance, thereby improving the cycle performance and energy efficiency of the battery 300 when the electrode 2000 is applied to the battery 300.

It may be understood that, in terminology of the present disclosure, "infiltrability" refers to an interaction capability between the active material in the electrode 200 and the electrolyte 340.

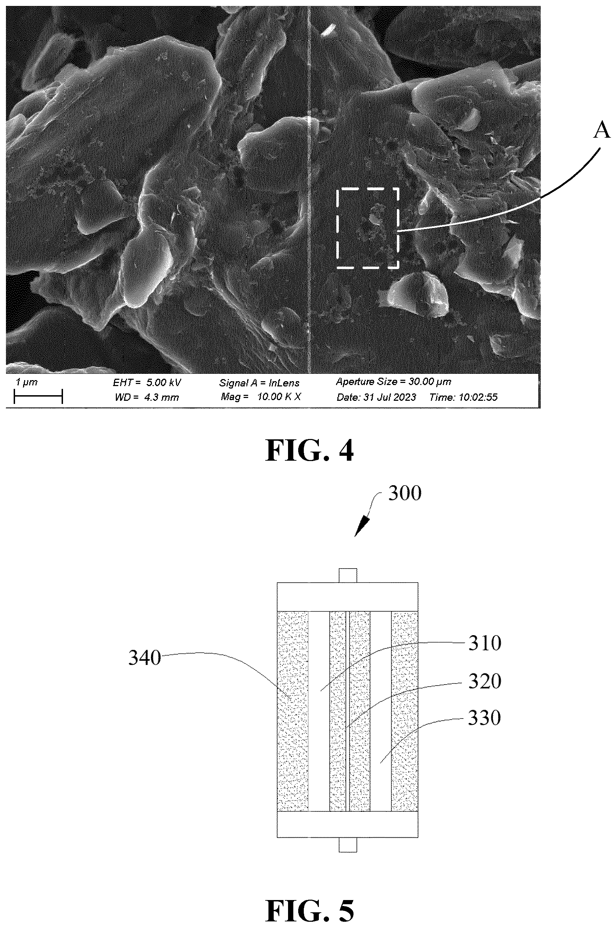

It may be understood that, FIG. 4 is an electron microscope image of an electrode 200 according to an embodiment of the present disclosure. A region indicated by a dotted-line box in FIG. 4 shows an electrolyte retention particle 100 disposed on the electrode 200. The electrolyte retention particle 100 includes a core 110 and a shell 120. Due to different materials, the shell 120 of the electrolyte retention particle 100 and the core 110 of the electrolyte retention particle 100 exhibit color differences in the microscope image.

In some embodiments, each of the capillary pores 122 has a radial dimension d satisfying: 2 nm ≤ d ≤ 30 nm.

Specifically, the radial dimension d of the capillary pore 122 may be, but is not limited to, 2 nm, 2.5 nm, 3 nm, 5 nm, 6 nm, 8 nm, 9 nm, 10 nm, 12 nm, 15 nm, 16 nm, 18 nm, 19 nm, 20 nm, 22 nm, 23 nm, 24 nm, 25 nm, 26 nm, 27 nm, 28 nm, 29 nm, 30 nm, etc.

In this embodiment, when the radial dimension d of the capillary pore 122 satisfies: 2 nm ≤ *d* ≤ 30 nm, the radial dimension of the capillary pore 122 is in a reasonable range, and the adsorption capacity and storage capacity of the capillary pore 122 for the electrolyte 340 are both in a reasonable range, so that a liquid adsorption amount per unit particle is relatively high. When the electrode 200 is assembled into the battery 300, the electrode 200 has the good infiltrability for the electrolyte 340, which helps to reduce the interface impedance between the electrode 200 and the electrolyte 340, and further helps to improve the cycle performance and energy efficiency of the battery 300. In addition, excessively large radial dimension of the capillary pore 122 can be avoided to prevent a reduction in the structural strength of the sub-particle 121, so that the electrode 200 has a good structural strength. When the radial dimension of the capillary pore 122 is too large, the capillary pore 122 occupies an excessive portion of the space in the sub-particle 121, resulting in reduced structural strength of the sub-particle 121. Since the shell 120 is composed of the multiple sub-particles 121 that are jointed together, the connections between the sub-particles 121 are also weakened accordingly, further reducing the structural strength of the shell 120. When the electrode 200 is assembled into the battery 300, the electrolyte retention particle 100 with a weaker structural strength is prone to deformation or fracturing during charging or discharging of the battery 300, and then the overall structural strength of the electrode 200 is reduced. Moreover, the electrolyte 340 is unable to be effectively fixed and maintained, so that the infiltrability of the electrode 200 for the electrolyte 340 is reduced, thereby reducing the cycle performance and energy efficiency of the battery 300. When the radial dimension of the capillary pore 122 is too small, the adsorption capacity and storage capacity of the capillary pore 122 for the electrolyte 340 are reduced, so that the liquid adsorption amount per unit particle is reduced. When the electrode 200 is assembled into the battery 300, the infiltrability of the electrode 200 for the electrolyte 340 is reduced, and the interface impedance at which the active ions in the electrolyte 340 react with the active particles 500 in the electrode 200 is increased, thereby reducing the cycle performance and energy efficiency of the battery 300.

Preferably, in some embodiments, the radial dimension d of the capillary pores 122 satisfies: 5 nm ≤ *d* ≤ 25 nm.

Specifically, the radial dimension d of the capillary pore 122 may be, but is not limited to, 5 nm, 6 nm, 8 nm, 9 nm, 10 nm, 12 nm, 15 nm, 16 nm, 18 nm, 19 nm, 20 nm, 22 nm, 23 nm, 24 nm, 25 nm, etc.

In some embodiments, in the shell 120, the capillary pores 122 have a distribution density *a* satisfying: 0.4 cm³/g *≤ a* ≤ 3 cm³/g.

Specifically, the distribution density *a* of the capillary pores 122 may be, but is not limited to, 0.4 cm³/g, 0.6 cm³/g, 0.8 cm³/g, 0.9 cm³/g, 1 cm³/g, 1.2 cm³/g, 1.5 cm³/g, 1.6 cm³/g, 1.8 cm³/g, 1.9 cm³/g, 2 cm³/g, 2.2 cm³/g, 2.5 cm³/g, 2.6 cm³/g, 2.7 cm³/g, 2.9 cm³/g, 3 cm³/g, etc.

In this embodiment, when the distribution density *a* of the capillary pores 122 satisfies: 0.4 cm³/g ≤ a ≤ 3 cm³/g, the distribution density of the capillary pores 122 is in a reasonable range, so that the adsorption capability and the infiltrability of the electrolyte retention particle 100 for the electrolyte 340 are both in a reasonable range. When the electrode 200 is assembled into the battery 300, the electrode 200 has the good infiltrability for the electrolyte 340, and an impedance at which the active ions in the electrolyte 340 chemically react with the active particles 500 in the electrode 200 is effectively reduced, so that the battery 300 has the higher cycle performance and energy efficiency. In addition, excessive volume of the shell 120 occupied due to excessively distribution density of the capillary pores 122 can be avoided, so that the sub-particle 121 and the electrolyte retention particle 100 have the good structural strength, and thus the overall structural strength of the electrode 200 is good. When the distribution density of the capillary pores 122 is too large, the volume occupied by the capillary pores 122 in the shell 120 is too large, so that the structural strength of the shell 120 is weak. When the electrode 200 is assembled into the battery 300, the electrolyte retention particle 100 with a weaker structural strength is prone to deformation or fracturing during charging or discharging of the battery 300, and then the overall structural strength of the electrode 200 is reduced. Moreover, the electrolyte 340 is unable to be effectively fixed and maintained, so that the infiltrability of the electrode 200 for the electrolyte 340 is reduced, thereby reducing the cycle performance and energy efficiency of the battery 300. When the distribution density of the capillary pores 122 is too small, in other words, when in the shell 120, the volume occupied by all the capillary pores 122 is too small, the adsorption capacity and the infiltrability of the electrolyte retention particles 100 for the electrolyte 340 are poor, and the liquid adsorption amount per unit particle is reduced. When the electrode 200 is assembled into the battery 300, the infiltrability of the electrode 200 for the electrolyte 340 is poor, thereby reducing the cycle performance and energy efficiency of the battery 300.

In some embodiments, each of the multiple sub-particles 121 has a particle size *D1* satisfying: 50 nm ≤ *D1* ≤ 90 nm.

Specifically, the particle size *D1* of the sub-particle 121 may be, but is not limited to, 50 nm, 55 nm, 58 nm, 60 nm, 64 nm, 68 nm, 70 nm, 72 nm, 75 nm, 78 nm, 80 nm, 82 nm, 84 nm, 86 nm, 88 nm, 90 nm, etc.

In this embodiment, when the particle size *D1* of the sub-particle 121 satisfies: 50 nm ≤ *D1* ≤ 90 nm, the particle size *D1* of the sub-particle 121 is in a reasonable range. Accordingly, when the outer diameter of the electrolyte retention particle 100 and the diameter of the core 110 are determined, the quantity of the sub-particles 121 of the shell 120 is in a reasonable range. When the multiple sub-particles 121 are jointed together to form the shell 120, the shell 120 has the higher structural strength. In addition, each sub-particle 121 has the capillary pores 122, so that the specific surface area of the electrolyte retention particle 100 can be effectively increased due to the sub-particle 121 with the capillary pores 122. The multiple capillary pores 122 have good adsorption performance for the electrolyte 340, so that the electrolyte retention particle 100 has the good electrolyte retention capacity, which is beneficial to improving the infiltrability of the electrode 200 for the electrolyte 340. When the particle size *D1* of the sub-particle 121 is too large, the connections between the multiple sub-particles 121 are weakened, so that structural strength of the shell 120 is weaker, and then structural strength of the electrolyte retention particle 100 is reduced. When the electrode 200 is assembled into the battery 300, the electrolyte retention particle 100 with a weaker structural strength is prone to deformation or fracturing during charging and discharging of the battery 300, and then the overall structural strength of the electrode 200 is reduced. Moreover, the electrolyte 340 is unable be effectively fixed and maintained, so that the infiltrability of the electrode 200 for the electrolyte 340 is reduced, thereby reducing the cycle performance and energy efficiency of the battery 300. When the particle size *D1* of the sub-particle 121 is too small, correspondingly, the radial dimension of the capillary pore 122 of the sub-particle 121 is too small, so that it is difficult for the capillary pore 122 to adsorb the electrolyte 340, thereby reducing the electrolyte retention effect of the electrolyte retention particle 100. When the electrode 200 is assembled into the battery 300, the infiltrability of the electrode 200 for the electrolyte 340 is poor, and the interface impedance between the electrode 200 and the electrolyte 340 is increased, so that the cycle performance of the battery 300 is poor and energy efficiency of the battery 300 is low.

In some embodiments, the core 110 has a diameter *D2*. Each of the electrolyte retention particles 100 has an outer diameter *D3. D2* and *D3* satisfy: 1:3 ≤ *D2: D3* ≤ 1:1.2.

In particular, the value of *D2: D3* may be, but is not limited to, 1:3, 1:2.9, 1:2.7, 1:2.5, 1:2.4, 1:2.2, 1:2.0, 1:1.8, 1:1.7, 1:1.6, 1:1.5, 1:1.4, 1:1.3, 1:12, etc.

In this embodiment, when a ratio of the diameter D2 of the core 110 to the outer diameter D3 of the electrolyte retention particle 100 satisfies: 1:3 ≤ *D2: D3* ≤ 1:1.2, both the diameter D2 of the core 110 and the outer diameter D3 of the electrolyte retention particle 100 are in a reasonable range, in other words, both the diameter of the core 110 and the thickness of the shell 120 are in a reasonable range. The capillary pores 122 of the shell 120 can effectively adsorb the electrolyte 340, and the core 110 has a large enough volume to effectively store the electrolyte 340, so that the liquid adsorption amount per unit particle is high. When the electrode 200 is assembled into the battery 300, the electrode 200 has a good infiltrability for the electrolyte 340, thereby reducing the impedance at which the active ions in the electrolyte 340 react with active particles 500 of the electrode 200, so that the battery 300 has a high cycle performance and energy efficiency. When the value of *D2: D3* is too large, the diameter *D2* of the core 110 is too large, or the outer diameter *D3* of the electrolyte retention particles 100 is too small, in other words, in the electrolyte retention particle 100, the diameter of the core 110 is too large, and the thickness of the shell 120 is too small. If the diameter of the core 110 is too large and the thickness of the shell 120 is too small, correspondingly, the quantity of the capillary pores 122 of the shell 120 is small, so that the adsorption amount of the electrolyte 340 by the shell 120 is reduced, and then the amount of the electrolyte 340 stored in the core 110 is reduced, thereby reducing the liquid adsorption amount per unit particle. When the electrolyte retention particle 100 is applied to the electrode 200 assembled into the battery 300, the electrode 200 has poor infiltrability for the electrolyte 340, thereby reducing the cycle performance and energy efficiency of the battery 300. When the value of *D2: D3* is too small, the diameter *D2* of the core 110 is too small, or the outer diameter *D3* of the electrolyte retention particles 100 is too large, in other words, in the electrolyte retention particle 100, the diameter of the core 110 is too small, and the thickness of the shell 120 is too large. In the electrolyte retention particle 100 provided in this embodiment, after the capillary pores 122 of the shell 120 adsorbs the electrolyte 340, since the volume of the core 110 is too small, it is difficult for the core 110 to store the electrolyte 340 effectively, and then the electrolyte 340 adsorbed by the capillary pores 122 overflows out of the electrolyte retention particle 100, thereby reducing the liquid adsorption amount per unit particle. When the electrode 200 is assembled into the battery 300, the electrode 200 and the electrolyte 340 have poor infiltrability, thereby reducing the cycle performance and energy efficiency of the battery 300.

In some embodiments, the diameter *D2* of the core 110 satisfies: 80 nm ≤ *D2 ≤* 300 nm.

Specifically, the diameter *D2* of the core 110 may be, but is not limited to, 80 nm, 85 nm, 90 nm, 100 nm, 120 nm, 140 nm, 150 nm, 160 nm, 180 nm, 190 nm, 200 nm, 210 nm, 220 nm, 230 nm, 250 nm, 270 nm, 280 nm, 290 nm, 300 nm, etc.

In this embodiment, when the diameter *D2* of the core 110 satisfies: 80 nm ≤ *D2* ≤ 300 nm, the diameter *D2* of the core 110 is in a reasonable range, and in order to ensure the electrolyte retention effect of the electrolyte retention particle 100, the thickness of the shell 120 is also in a reasonable range. When the capillary pores 122 of the shell 120 adsorb the electrolyte 340, the electrolyte 340 can be effectively stored in the core 110, thereby greatly improving the electrolyte retention performance of the electrolyte retention particle 100. When the electrode 200 is assembled into the battery 300, the electrode 200 has a high infiltrability for the electrolyte 340, and the battery 300 has a good cycle performance. In addition, it is also possible to avoid increasing difficulty in compacting the electrode 200 due to an excessively large particle size of the electrolyte retention particle 100, so that the electrode 200 has a relatively high compaction density and energy density when the electrode 200 is applied to the battery 300. When the diameter of the core 110 is too large, in order to ensure the electrolyte retention effect of the electrolyte retention particle 100, the thickness of the shell 120 is also large enough, so that the outer diameter of the electrolyte retention particle 100 is too large, in other words, the particle size of the electrolyte retention particle 100 is too large. When the electrolyte retention particle 100 is applied to the electrode 200, there is a large gap between the electrolyte retention particle 100 with an excessively large particle size and the active particle 500, so that the compaction density of the electrode 200 is small, and the energy density of the electrode 200 is reduced. When the diameter of the core 110 is excessively small, after the shell 120 adsorbs the electrolyte 340, the core 110 is insufficient to store the electrolyte 340, so that the electrolyte 340 overflows out of the electrolyte retention particle 100, thereby reducing the electrolyte retention performance of the electrolyte retention particle 100. When the electrolyte retention particle 100 is applied to the electrode 200 assembled into the battery 300, the electrodes 200 have poor infiltrability for the electrolyte 340, resulting in poor cycle performance of the battery 300.

In some embodiments, the core 110 is a polymer synthesized from one or more selected from a group consisting of acrylic, acrylate, acrylamide, acrylonitrile, butadiene, styrene, and vinylidene fluoride.

In this embodiment, the core 110 is a polymer synthesized from monomers. The core 110 is the polymer synthesized from one or more selected from a group consisting of acrylic, acrylate, acrylamide, acrylonitrile, butadiene, styrene, and vinylidene fluoride. On one hand, the core 110 has a good adhesive performance, ensuring strong adhesion between the core 110 and the shell 120. In addition, when the electrolyte retention particle 100 is applied to the electrode 200, the electrolyte retention particle 100 also has a good adhesive performance with the active particle 500. On the other hand, the material selected for the core 110 has low reactivity. When the electrolyte retention particle 100 is applied to the electrode 200 assembled into the battery 300, a side reaction between the electrolyte retention particle 100 and the active particle 500 or the electrolyte 340 can be avoided, which helps to ensure the electrolyte retention performance of the electrolyte retention particle 100. Consequently, the infiltrability of the electrode 200 for the electrolyte 340 is improved, and the cycle performance and energy efficiency of the battery 300 are improved.

Alternatively, the core 110 is selected from one of styrene butadiene rubber (SBR), polyacrylic acid (PAA), polyacrylonitrile (PAN), and polyvinylidene fluoride (PVDF).

In some embodiments, a material of the shell 120 is selected from one of silane, silicon dioxide, silicate ester, and aluminium oxide.

It may be understood that, the shell 120 is made of an inorganic material.

In this embodiment, the material of the shell 120 is selected from one of silane, silicon dioxide, silicate ester, and aluminium oxide. Compared to the shell 120 made of a polymer with poor oxidation resistance, since double bonds are absent from silane, silicon dioxide, silicate ester, and aluminium oxide, the shell 120 has high oxidation resistance. When the electrolyte retention particle 100 is applied to the electrode 200 and the electrode 200 is the positive electrode 310, the electrolyte retention particle 100 is less prone to oxidation under high voltage. Therefore, the electrolyte retention particle 100 provided in the present disclosure may be for the negative electrode 330 and may be for the positive electrode 310, thereby improving applicability of the electrolyte retention particle 100.

Alternatively, in some embodiments, the capillary pores 122 of the sub-particle 121 of the shell 120 is prepared as follows. One of silane, silicon dioxide, silicate ester, and aluminium oxide is selected and mixed with a porous former, so that the shell 120 formed has multiple sub-particles 121. The porous former is then volatilized by methods such as high temperature to obtain capillary pores 122 of the sub-particles 121. Specifically, one of silane, silicon dioxide, silicate ester, and aluminium oxide is placed in an organic solvent (e.g., alkyl esters, cyclohexane), and then added them to an aqueous solution dissolved with alkyl ammonium cationic emulsifiers. The mixture is heated and stirred to allow the reaction to proceed. By a two-phase method, the selected one of silane, silicon dioxide, silicate ester, and aluminium oxide can be continuously precipitated and transferred into an aqueous phase. Finally, the organic solvent remaining on the surface of the sub-particle 121 is dried at a high temperature to form the sub-particle 121 having the capillary pores 122.

In some embodiments, each of the electrolyte retention particles 100 has a specific surface area ranging from 85 m²/g to 350 m²/g.

Specifically, the specific surface area of the electrolyte retention particle 100 may be, but is not limited to, 85 m²/g, 88 m²/g, 100 m²/g, 120 m²/g, 125 m²/g, 150 m²/g, 155 m²/g, 188 m²/g, 190 m²/g, 200 m²/g, 205 m²/g, 235 m²/g, 250 m²/g, 265 m²/g, 280 m²/g, 295 m²/g, 300 m²/g, 310 m²/g, 325 m²/g, 335 m²/g, 350 m²/g, etc.

In this embodiment, when the specific surface area of the electrolyte retention particle 100 ranges from 85 m²/g to 350 m²/g, the specific surface area of the electrolyte retention particle 100 is in a reasonable range. It may be understood that, the capillary pores 122 of the sub-particle 121 greatly increase the specific surface area of the electrolyte retention particle 100, so that the contact area between the electrolyte retention particle 100 and the electrolyte 340 is increased. After the pore 122 of the electrolyte retention particle 100 absorbs the electrolyte 340, the electrolyte 340 can be stored in the core 110, and the electrolyte retention particles 100 have a relatively strong electrolyte retention performance. When the electrolyte retention particle 100 is applied to the electrode 200 assembled into the battery 300, the electrode 200 has good infiltrability for the electrolyte 340, and thus the battery 300 has better cycle performance and higher energy efficiency. When the specific surface area of the electrolyte retention particle 100 is too large, correspondingly, the capillary pores 122 occupy a large area on the surface of the shell 120, so that the structural strength of the shell 120 is weak. When the electrolyte retention particle 100 is applied to the electrode 200 assembled into the battery 300, the electrolyte retention particle 100 with a weak structural strength is prone to deformation or fracturing during charging and discharging of the battery 300, so that the overall structural strength of the electrode 200 is reduced. In addition, the electrolyte 340 is unable to be effectively fixed and retained, and the infiltrability of the electrode 200 for the electrolyte 340 is reduced, thereby reducing the cycle performance and energy efficiency of the battery 300. When the specific surface area of the electrolyte retention particle 100 is too small, correspondingly, the capillary pores 122 occupy a small area on the surface of the shell 120, so that the effective contact area between the electrolyte retention particle 100 and the electrolyte 340 is small, thereby reducing the adsorption capacity and infiltrability of the electrolyte retention particle 100 for the electrolyte 340, and reducing the liquid adsorption amount per unit particle. When the electrolyte retention particle 100 is applied to the electrode 200 assembled into the battery 300, the electrode 200 has the poor infiltrability for the electrolyte 340, thereby reducing cycle performance and energy efficiency of the battery 300.

As illustrated in FIG. 5, a battery 300 is provided in the present disclosure. The battery 300 includes a positive electrode 310, a separator 320, a negative electrode 330, and an electrolyte 340. The separator 320 is disposed at one side of the positive electrode 310. The negative electrode 330 is disposed at one side of the separator 320 positioned facing away from the positive electrode 310. At least one of the positive electrode 310 or the negative electrode 330 is the electrode 200 provided in the present disclosure. At least a part of the positive electrode 310 and at least a part of the negative electrode 330 are immersed in the electrolyte 340.

It may be understood that, the positive electrode 310, the separator 320, and the negative electrode 330 are stacked in sequence.

It may be understood that, in this embodiment, the positive electrode 310 is the electrode 200 provided in the present disclosure. In other embodiments, the negative electrode 330 is the electrode 200 provided in the present disclosure. In still other embodiments, each of the positive electrode 310 and the negative electrode 330 is the electrode 200 provided in the present disclosure.

In this embodiment, when at least one of the positive electrode 310 or the negative electrode 330 is the electrode 200 provided in the present disclosure, the electrode 200 has good infiltrability for the electrolyte 340, which helps to reduce the impedance at which the active ions in the electrolyte 340 react with the active particles 500 in the electrode 200, so that the battery 300 has better cycle performance and higher energy efficiency.

Alternatively, the battery 300 may be, but is not limited to, a lithium ion battery, a sodium ion battery, or the like.

Alternatively, the battery 300 may be one of a cylindrical battery, a prismatic battery, a pouch battery, or the like.

Alternatively, the separator 320 is made of at least one of glass fiber, non-woven fabric, polyethylene, polypropylene, polyvinylidene fluoride, etc. In some embodiments, the separator 320 is a monolayer film. In other embodiments, the separator 320 is a multilayer composite film. When the separator 320 is a multilayer composite film, materials of various layers may be the same or different.

Alternatively, the separator 320 has the thickness ranging from 14 µm to 18 µm. Specifically, the thickness of the separator 320 may be, but is not limited to, 14 µm, 14.5 µm, 15 µm, 15.5 µm, 16 µm, 16.5 µm, 17 µm, 17.5 µm, 18 µm, etc.

Alternatively, the current collector layer 210 of the positive electrode 310 is selected from aluminum foil. The current collector layer 210 of the positive electrode 310 has good electrical conductivity and high mechanical strength.

Alternatively, the active layer 220 of the positive electrode 310 includes the active particles 500. The active particles 500 of the positive electrode 310 are selected from lithium transition-metal oxide particles and modified particles thereof. The modified particles refer to the lithium transition-metal oxide particles that undergo doping modification and/or coating modification.

Preferably, the active particles 500 of the positive electrode 310 are selected from one or more of lithium cobalt oxide, lithium nickel oxide, lithium manganese oxide, lithium nickel manganese oxide, lithium nickel cobalt manganese oxide, and lithium nickel cobalt aluminum oxide.

Alternatively, the active layer 220 of the positive electrode 310 further includes a positive adhesive agent and a positive conductive agent. The positive adhesive agent is configured to adhere various components (e.g., at least two of the active particle, the positive conductive agent, and the electrolyte retention particle 100) in the active layer 220, so as to improve overall performance of the positive electrode 310. The positive conductive agent can improve the conductivity of the active layer 220.

Alternatively, the positive adhesive agent is selected from at least one of polyvinylidene fluoride, polytetrafluoroethylene, etc.

Alternatively, the positive conductive agent is selected from at least one of graphite, superconducting carbon, acetylene black, carbon black, ketjen black, carbon dot, carbon nanotube, graphene, carbon nanofiber, etc.

Alternatively, the current collector layer 210 of the negative electrode 330 is selected from copper foil. The current collector layer 210 of the negative electrode 330 has good electrical conductivity and high mechanical strength.

Alternatively, the active particles 500 of the negative electrode 330 are selected from one or more of graphite, meso-carbon micro-bead, hard carbon, and soft carbon, with graphite being preferred. The graphite may be selected from one or more of synthetic graphite and natural graphite.

Alternatively, the active layer 220 of the negative electrode 330 further includes a negative adhesive agent, a negative conductive agent, and a thickener. The negative adhesive agent is configured to adhere components (i.e., at least two of the active particle, the negative conductive agent, the electrolyte retention particle 100, and the thickener) in the active layer 220, so as to improve overall performance of the negative electrode 330. The negative conductive agent can improve electrical conductivity of the active layer 220 of the negative electrode 330. The thickener can improve adhesion of the active layer 220 of the negative electrode 330.

Alternatively, the negative conductive agent is selected from at least one of acetylene black, conductive carbon black, carbon nanotube, carbon fiber, graphene, etc.

Alternatively, the negative adhesive agent is selected from one or more of polyacrylic acid (PAA), sodium polyacrylate (PAAS), polyvinyl alcohol (PVA), styrene-butadiene rubber (SBR), carboxymethyl cellulose (CMC), sodium alginate, polymethyl methacrylate (PMA), carboxymethyl chitosan (CMCS), etc.

Alternatively, the thickener is selected from at least one of sodium carboxymethyl cellulose (Na CMC), polyacrylamide (PAM), PMA.

Alternatively, the electrolyte 340 includes an electrolyte salt and a solvent. The solvent is used for dissolving the electrolyte salt, so that the electrolyte salt releases active ions.

Alternatively, the electrolyte salt is selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(trifluoromethanesulfonyl)imide (LiFSI), lithium bis(trifluoromethanesulfonyl)imide (LiTFSI), lithium trifluoromethanesulfonate (LiTFS), lithium difluorooxalate borate (LiDFOB), lithium bis(oxalate)borate (LiBOB), lithium difluorophosphate (LiPO₂F₂), lithium difluoro(oxalato)phosphate (LiDFOP), and lithium tetrafluoro(oxalato)phosphate (LiTFOP).

Alternatively, the solvent is selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), γ-butyrolactone (GBL), sulfolane (SF), dimethyl sulfone (MSM), ethyl methyl sulfone (EMS), and diethyl sulfone (ESE).

Alternatively, the electrolyte 340 further includes an additive. The additive is dissolved in the solvent. The additive may be, but is not limited to, a positive film-forming additive or a negative film-forming additive. The additive may also be an additive for improving performance of the battery 300. Alternatively, the additive may be an additive for improving overcharge resistance of the battery 300, an additive for improving high temperature resistance of the battery 300, or an additive for improving low temperature resistance of the battery 300.

In some embodiments, the positive electrode 310 is the electrode 200 provided in the present disclosure. A mass fraction *A1* of the electrolyte retention particles 100 in the active layer 220 of the positive electrode 310 satisfies: 0.4% ≤ *A1* ≤ 1.2%.

Specifically, the mass fraction *A1* of the electrolyte retention particles 100 may be, but is not limited to, 0.4%, 0.45%, 0.48%, 0.5%, 0.52%, 0.58%, 0.6%, 0.65%, 0.7%, 0.75%, 0.8%, 0.9%, 0.95%, 1%, 1.05%, 1.1%, 1.15%, 1.2%, etc.

It may be understood that, in the active layer 220 of the positive electrode 310, the mass fraction of the electrolyte retention particles 100 is a ratio of the mass of the electrolyte retention particles 100 to the mass of the active layer 220 of the positive electrode 310.

In this embodiment, when the mass fraction *A1* of the electrolyte retention particles 100 in the active layer 220 of the positive electrode 310 satisfies 0.4% ≤ *A1* ≤ 1.2%, the mass fraction of the electrolyte retention particles 100 is in a reasonable range. On one hand, the electrolyte retention particles 100 have better electrolyte retention performance, can effectively improve the infiltrability of the positive electrode 310 for the electrolyte 340, and reduce the impedance of active ions in the electrolyte 340 at the interface between the positive electrode 310 and the electrolyte 340, so that the battery 300 has better cycle performance. On the other hand, the mass fraction of the active particles 500 of the positive electrode 310 is also in a reasonable range, so that the positive electrode 310 has a higher energy density, which helps to prolong the cycle life of the battery 300. When the mass fraction of the electrolyte retention particles 100 is too large, that is, when the mass fraction of the electrolyte retention particles 100 in the active layer 220 of the positive electrode 310 is too large, the mass fraction of the active particles is too small, thereby reducing the energy density of the positive electrode 310. In addition, when the positive electrode 310 is applied to the battery 300, the cycle life of the battery 300 is shortened. When the mass fraction of the electrolyte retention particles 100 is too small, that is, when the mass fraction of the electrolyte retention particles 100 in the active layer 220 of the positive electrode 310 is too small, it is difficult for the electrolyte retention particles 100 to improve the infiltrability of the positive electrode 310 for the electrolyte 340. When the positive electrode 310 is applied to the battery 300, the impedance of active ions in the electrolyte 340 at the interface between the electrolyte 340 and the positive electrode 310 is too large, so that the cycle performance of the battery 300 is poor and the energy efficiency of the battery 300 is low.

In some embodiments, the negative electrode 330 is the electrode 200 provided in the present disclosure. A mass fraction *A2* of the electrolyte retention particles 100 in the active layer 220 of the negative electrode 330 satisfies: 0.2% ≤*A2* ≤ 0.8%.

Specifically, the mass fraction *A2* of the electrolyte retention particles 100 may be, but is not limited to, 0.2%, 0.25%, 0.3%, 0.35%, 0.4%, 0.45%, 0.48%, 0.5%, 0.52%, 0.55%, 0.6%, 0.65%, 0.7%, 0.75%, 0.8%, etc.

It may be understood that, in the active layer 220 of the negative electrode 330, the mass fraction of the electrolyte retention particles 100 is a ratio of the mass of the electrolyte retention particles 100 to the mass of the active layer 220 of the negative electrode 330.

In this embodiment, when the mass fraction *A2* of the electrolyte retention particles 100 in the active layer 220 of the negative electrode 330 satisfies 0.4% ≤ *A2* ≤ 1.2%, the mass fraction of the electrolyte retention particles 100 is in a reasonable range. On one hand, the electrolyte retention particles 100 have better electrolyte retention performance, can effectively improve the infiltrability of the negative electrode 330 for the electrolyte 340, and reduce the impedance of active ions in the electrolyte 340 at the interface between the negative electrode 330 and the electrolyte 340, so that the battery 300 has better cycle performance. On the other hand, the mass fraction of the active particles 500 of the negative electrode 330 is also in a reasonable range, so that the negative electrode 330 has a higher energy density, which helps to prolong the cycle life of the battery 300. When the mass fraction of the electrolyte retention particles 100 is too large, that is, when the mass fraction of the electrolyte retention particles 100 in the active layer 220 of the negative electrode 330 is too large, the mass fraction of the active particles is too small, thereby reducing the energy density of the negative electrode 330. In addition, when the negative electrode 330 is applied to the battery 300, the cycle life of the battery 300 is shortened. When the mass fraction of the electrolyte retention particles 100 is too small, that is, when the mass fraction of the electrolyte retention particles 100 in the active layer 220 of the negative electrode 330 is too small, it is difficult for the electrolyte retention particles 100 to improve the infiltrability of the negative electrode 330 for the electrolyte 340. When the negative electrode 330 is applied to the battery 300, the impedance of active ions in the electrolyte 340 at the interface between the electrolyte 340 and the negative electrode 330 is too large, so that the cycle performance of the battery 300 is poor and the energy efficiency of the battery 300 is low.

The technical solutions of the present disclosure will be further described below through multiple embodiments.

### Examples 1 to 8, and comparative example

### 1. Preparation of electrolyte retention particles 100

First, sub-particles 121 are formed. Specifically, one of silane, silicon dioxide, silicate ester, and aluminum oxide is placed in an organic solvent (e.g., alkyl esters or cyclohexane). The organic solvent serves as a pore-forming agent. The mixture is added to an aqueous solution dissolved with alkyl ammonium cationic emulsifiers, followed by heating and stirring to allow the reaction to proceed. By a two-phase method, the selected one of silane, silicon dioxide, silicate ester, and aluminum oxide can be continuously precipitated and transferred into an aqueous phase. Finally, the organic solvent remaining on the surface of the sub-particle 121 is dried at a high temperature to form the sub-particles 121 having capillary pores 122. The radial dimension *d* of each capillary pore 122 satisfies: 2 nm ≤ *d* ≤ 30 nm. A distribution density *a* of each capillary pore 122 satisfies: 0.4 cm³/g ≤ *a* ≤ 3 cm³/g. The radial dimension *d* and distribution density *a* of the capillary pore 122 can be controlled by adjusting the type of organic solvent, the solubility of silane, silicon dioxide, silicate ester, and aluminum oxide in the organic solvent, and the concentration of silane, silicon dioxide, silicate ester, and aluminium oxide in the organic solvent.

Furthermore, a polymer synthesized from one or more selected from a group consisting of acrylic, acrylate, acrylamide, acrylonitrile, butadiene, styrene, and vinylidene fluoride is used as a material for the core 110. The sub-particles 121 is mixed and stirred with the material of the core 110 for adsorption to form the electrolyte retention particles 100. A ratio of the core 110 to the electrolyte retention particles 100 (D3) is controlled by the mass ratio of the sub-particles 121 to the material of the core 110.

### 2. Preparation of the electrode 200

### (1) Preparation of the positive electrode 310

Active particles, electrolyte retention particles 100, a positive conductive agent, and a positive adhesive agent, that are suitable for the active layer 220 of the positive electrode 310, are dispersed in a solvent (e.g., N-methyl pyrrolidone) to form a uniform positive slurry. The positive slurry is coated onto the current collector layer 210 to form the active layer 220 of the positive electrode 310. After drying, cold pressing, and other processes, the positive electrode 310 is obtained. The mass fraction *A1* of the liquid-retaining particles 100 in the active layer 220 of the positive electrode 310, as used in each of examples 1 to 8 and the comparative example, is shown in Table 1.

### (2) Preparation of the negative electrode 330

Active particles, electrolyte retention particles, a negative conductive agent, a negative adhesive agent, and a thickener, that are suitable for the active layer 220 of the negative electrode 330, are dispersed in a solvent (e.g., deionized water) to form a uniform negative slurry. The negative slurry is coated onto the negative current collector to form the active layer 220 of the negative electrode 330. After drying, cold pressing, and other processes, the negative electrode 330 is obtained. The mass fraction *A2* of the liquid-retaining particles 100 in the active layer 220 of the negative electrode 330, as used in each of examples 1 to 8 and the comparative example, is shown in Table 1.

### 3. Preparation of the separator 320 and the electrolyte 340

A polyethylene separator 320 having the thickness of 16 µm is selected.

In a glove box under an argon atmosphere with a moisture content of ≤ 1 ppm, ethylene carbonate, dimethyl carbonate, and ethyl methyl carbonate are mixed at a mass fraction of 1:1:1, a dried electrolyte salt (e.g., lithium hexafluorophosphate) is dissolved into a solvent, stirred until completely dissolved, and an additive is added. After thorough mixing, the electrolyte 340 is obtained.

### 4. Assembly of the battery 300

The positive electrode 310 and the separator 320 prepared in each of examples 1 to 8 and comparative example, and the negative electrode 330 prepared in each of examples 1 to 8 and comparative example are laminated in order, ensuring that the separator 320 is located between the positive electrode 310 and the negative electrode 330, and then are wound to obtain a bare cell. The bare cell is placed in an outer package, dried, and then injected with the aforementioned electrolyte 340. After undergoing processes such as standing, formation, encapsulation, etc., example batteries 1 to 8 and a comparative battery are obtained. The positive electrode 310 in example 1 and the negative electrode 330 in example 1 are provided in the example battery 1. The positive electrode 310 in example 2 and the negative electrode 330 in example 2 are provided in the example battery 2. The positive electrode 310 in example 3 and the negative electrode 330 in example 3 are provided in the example battery 3, and so on.

Table 1 below shows structural parameters of the positive electrode 310 and the negative electrode 330 in each of examples 1 to 8 and comparative example. Table 1 shows the mass fraction *A1* of the electrolyte retention particles 100 in the active layer 220 of the negative electrode 330 in each of examples 1 to 8 and comparative examples, and the mass fraction *A2* of the electrolyte retention particles 100 in the active layer 220 of the negative electrode 330 in each of examples 1 to 8 and comparative example.

**Table 1 Structural parameters of the positive electrode 310 and the negative electrode 330 in each of examples 1 to 8 and comparative example**

| Example and comparative example | Mass fraction *A1* of electrolyte retention particles 100 in the active layer 220 of the positive electrode 310 | Mass fraction *A2* of electrolyte retention particles 100 in the active layer 220 of the negative electrode 330 |
|---|---|---|
| | (%) | (%) |
| Example 1 | 0 | 0.2 |
| Example 2 | 0 | 0.4 |
| Example 3 | 0 | 0.6 |
| Example 4 | 0 | 0.8 |
| Example 5 | 0 | 1 |
| Example 6 | 0.4 | 0 |
| Example 7 | 0.8 | 0 |
| Example 8 | 0.8 | 0.8 |
| Comparative example | 0 | 0 |

### Performance test of the battery 300

### 1. Test of the infiltrability of the electrode 200 for the electrolyte 340

At 25°C, a sample of the electrode 200 prepared in each of examples 1 to 8 and comparative example is cut to a fixed length of 14 cm and a fixed width of 1.5 cm. The sample is horizontally straightened, and then 2 mL of the electrolyte 340 is dropped onto the sample of the electrolyte sheet 200 by using a syringe. After 3 minutes, the infiltration length of the electrode 200 is measured. It can be seen that the infiltration length refers to the length of part of the sample of the electrode 200, straightened horizontally, that is infiltrated by the electrolyte 340 in the straightened direction.

The electrode 200 includes the positive electrode 310 and the negative electrode 330. The infiltration length of the positive electrode 310 for the electrolyte 340 and the infiltration length of the negative electrode 330 for the electrolyte 340 in each of examples 1 to 8 are shown in Table 2.

### 2. Test of internal resistance performance of the battery 300

### (1) Calculation of charge DCR (direct current internal resistance) at 50% SOC (state of charge)

The test temperature is 25°C. After formation, the example batteries 1 to 8 and the comparative battery are charged at a constant current of 0.5C until a voltage is 3.65V, then charged at a constant voltage of 3.65V until the current is 0.05C, and left to stand for 10 minutes. Subsequently, the example batteries 1 to 8 and the comparative battery are discharged at a constant current of 0.5C until the voltage is 2.5V, and left to stand for 10 minutes, where the capacity at this step was recorded as C0. At 25°C, the example batteries 1 to 8 and the comparative battery are charged at a constant current of 1C for 30 minutes. At this time, the example batteries 1 to 8 and the comparative battery each are at 50% SOC. After being left to stand for 1 hour, the example batteries 1 to 8 and the comparative battery are discharged at 1.07C0 for 30 seconds. After being left to stand for 40 seconds, V1 of each of the example batteries 1 to 8 and the comparative battery is recorded. The example batteries 1 to 8 and the comparative battery are charged at 1.07C0 for 30 s, and then V2 of each of the example batteries 1 to 8 and the comparative battery is recorded. After being left to stand for 10 minutes, the DCR of each of the example batteries 1 to 8 and the comparative battery at 50% SOC is calculated by DCR=(V2-V1)/1.07C0.

### (2) Calculation of discharge DCR at 50% SOC

The test temperature is 25°C. After formation, the example batteries 1 to 8 and the comparative battery are charged at a constant current of 0.5C0 until a voltage is 3.65V, then charged at a constant voltage of 3.65V until the current is 0.05C, and left to stand for 10 minutes. Subsequently, the example batteries 1 to 8 and the comparative battery are discharged at a constant current of 1C for 30 minutes. At this time, the example batteries 1 to 8 and the comparative battery each are at 50% SOC. After being left to stand for 1 hour, V3 of each of the example batteries 1 to 8 and the comparative battery is recorded. Then, the example batteries 1 to 8 and the comparative battery are discharged at 1.07C0 for 30s, and after being left to stand for 40 s, V4 of each of the example batteries 1 to 8 and the comparative battery is recorded. After being left to stand for 10 minutes, the DCR' of each of the example batteries 1 to 8 and the comparative battery at 50% SOC is calculated by DCR'=(V3-V4)/1.07C0.

The discharge DCR at 50% SOC refers to the direct current internal resistance measured during the discharge operation when the battery 300 is at 50% SOC. The charge DCR at 50% SOC refers to the direct current internal resistance measured during the charge operation when the battery 300 is at 50% SOC. The discharge DCR and the charge DCR of each of the example batteries 1 to 8 and the comparative battery at 50% SOC are shown in Table 2.

### 3. Test of cycle performance of the battery 300

After being left to stand at 25°C for 1 hour, the example batteries 1 to 8 and the comparative battery are charged at 0.5P until a voltage is 3.65V, and then discharged at 0.5P to until the voltage is 2.5V. An initial discharge capacity C₁ of the battery 300 and an initial discharge energy E₁ of the battery 300 are recorded. Each of the example batteries 1 to 8 and the comparative battery is cycled through three charge-discharge cycles, and a discharge energy E₃ and a charge energy E'₃ of each of the example batteries 1 to 8 and the comparative battery are recorded. Therefore, an energy efficiency E of each of the example batteries 1 to 8 and the comparative battery after being cycled three charge-discharge cycles can be calculated by E=E₃/E'₃ × 100%. Each of the example batteries 1 to 8 and the comparative battery is cycled through one charge-discharge cycle, and an initial discharge energy C₁ of each of the example batteries 1 to 8 and the comparative battery is recorded. Each of the example batteries 1 to 8 and the comparative battery is cycled through two hundred charge-discharge cycles, and a discharge capacity C₂₀₀ of each of the example batteries 1 to 8 and the comparative battery is recorded. Therefore, a capacity retention rate Cf of each of the example batteries 1 to 8 and the comparative battery can be calculated by Cf= C₂₀₀/C₁ × 100%.

The energy efficiency E and the capacity retention rate Cf after 500 cycles of each of the example batteries 1 to 8 and the comparative battery are shown in Table 2.

Table 2 below shows performance parameters of each of the example batteries 1 to 8 and the comparative battery.

**Table 2 Performance parameters of the example batteries 1 to 8 and the comparative battery**

| Example batteries and comparative battery | Infiltration length of positive electrode for electrolyte (cm) | Infiltration length of negative electrode for electrolyte (cm) | Discharge DCR at 50% SOC (mΩ) | Charge DCR at 50% SOC (mΩ) | Cycle energy efficiency after three cycles (%) | Cycle capacity retention rate after two hundred cycles (%) |
|---|---|---|---|---|---|---|
| Example battery 1 | 1.2 | 2.8 | 25.034 | 29.998 | 93.18 | 97.6 |
| Example battery 2 | 1.2 | 3.2 | 24.567 | 29.245 | 93.23 | 97.9 |
| Example battery 3 | 1.2 | 3.5 | 24.121 | 28.897 | 93.30 | 98.2 |
| Example battery 4 | 1.2 | 4.1 | 23.564 | 27.985 | 93.40 | 98.4 |
| Example battery 5 | 1.2 | 4.2 | 23.240 | 27.775 | 93.45 | 99.1 |
| Example battery 6 | 1.5 | 2.5 | 24.778 | 29.357 | 93.20 | 98.2 |
| Example battery 7 | 2.0 | 2.5 | 23.988 | 28.130 | 93.37 | 99.2 |
| Example battery 8 | 2.0 | 4.1 | 23.698 | 27.24 | 93.50 | 99.5 |
| Comparative battery | 1.2 | 2.5 | 25.698 | 30.24 | 93.15 | 97.5 |

As illustrated in Table 1 and Table 2, the positive electrode 310 and the negative electrode 330 in comparative example 1 both do not include electrolyte retention particles 100. At 25°C, the infiltration length of the positive electrode 310 for the electrolyte 340 is 1.2 cm, and the infiltration length of the negative electrode 330 for the electrolyte 340 is 2.5 cm. The infiltration length of the electrode 200 for the electrolyte 340 can represent the infiltrability of the electrode 200 for the electrolyte 340. Specifically, when the infiltration length of the positive electrode 310 for the electrolyte 340 is longer, the infiltrability of the positive electrode 310 for the electrolyte 340 is better. When the infiltration length of the negative electrode 330 for the electrolyte 340 is longer, the infiltrability of the negative electrode 330 for the electrolyte 340 is better.

Referring to examples 1 to 5 and comparative example, the mass fraction *A1* of the electrolyte retention particles 100 in the active layer 220 of the positive electrode 310 in each of examples 1 to 5 is 0. In other words, the active layer 220 of the positive electrode 310 in each of examples 1 to 5 does not include the electrolyte retention particles 100. The mass fraction *A2* of the electrolyte retention particles 100 in the active layer 220 of the negative electrode 330 in each of examples 1 to 4 satisfies: 0.2% ≤ *A2* ≤ 0.8%. The mass fraction *A2* of the electrolyte retention particles 100 in the active layer 220 of the negative electrode 330 in example 5 is greater than 0.8. It may be seen from performance parameters of the example batteries 1 to 5 that, the infiltration length of the negative electrode 330 in each of the example batteries 1 to 5 for the electrolyte 340 is longer than the infiltration length of the negative electrode 330 in the comparative battery for the electrolyte 340. The discharge DCR of each of example batteries 1 to 5 at 50% SOC is less than the discharge DCR of the comparative battery at 50% SOC. The charge DCR of each of example batteries 1 to 5 at 50% SOC is less than the charge DCR of the comparative battery at 50% SOC. In addition, the cycle energy efficiency after three cycles of each of the example batteries 1 to 5 is higher than the cycle energy efficiency after three cycles of the comparative battery. The cycle capacity retention rate after two hundred cycles of each of the example batteries 1 to 5 is higher than the cycle capacity retention rate after two hundred cycles of the comparative battery. The reasons lie below. The negative electrode 330 in each of examples 1 to 5 includes the electrolyte retention particles 100, each of the electrolyte retention particles 100 includes the core 110 and the shell 120, the shell 120 has multiple capillary pores 122, and each capillary pore 122 may be used to absorb the electrolyte 340 and the electrolyte 340 is stored in the core 110, so that the electrolyte retention particle 100 has good electrolyte retention performance. When the electrolyte retention particles 100 are applied to the negative electrode 330, the infiltrability of the negative electrode 330 for the electrolyte 340 is improved, and then the infiltration length of the negative electrode 330 for the electrolyte 340 is increased. Moreover, when the infiltrability of the negative electrode 330 for the electrolyte 340 is better, the effective contact area between the electrolyte 340 and the negative electrode 330 is larger, so that the impedance of the active ions in the battery 300 at the interface between the negative electrode 330 and the electrolyte 340 is reduced, and then the discharge DCR of each of the example batteries 1 to 5 at 50% SOC is less than the discharge DCR of the comparative battery at 50% SOC, and the charge DCR of each of the example batteries 1 to 5 at 50% SOC is less than the charge DCR of the comparative battery at 50% SOC. It is more conducive to charging and discharging processes of the battery 300, finally resulting in relatively high cycle energy efficiency and capacity retention rate of each of the example batteries 1 to 5, and better cycle performance of each of the example batteries 1 to 5 than the comparative battery. Further, as the mass fraction of the electrolyte retention particles 100 in the active layer 220 of the negative electrode 330 is increased, the infiltration length of the negative electrode 330 for the electrolyte 340 is continuously increased. When *A2* is greater than 0.8%, it is also difficult to increase the infiltration length of the negative electrode 330 for the electrolyte 340 even if the mass fraction of the electrolyte retention particles 100 is continuously increased. Therefore, in order to save the raw material cost of the negative electrode 330, it is necessary to avoid excessive electrolyte retention particles 100. When *A2* satisfies: 0.2% ≤*A2* ≤ 0.8%, not only can the negative electrode 330 have high infiltrability for the electrolyte 340, but also the raw material cost of the negative electrode 330 can be effectively controlled.

Referring to example 6, example 7, and comparative example, the mass fraction *A1* of the electrolyte retention particles 100 in the active layer 220 of the negative electrode 330 in each of example 6 and example 7 is 0. In other words, the active layer 220 of the positive electrode 310 in each of example 6 and example 7 does not include the electrolyte retention particles 100. The mass fraction *A1* of the electrolyte retention particles 100 in the active layer 220 of the negative electrode 330 in each of example 6 and example 7 satisfies: 0.4% ≤ *A1* ≤ 1.2%. It may be seen from performance parameters of the example battery 6 and the example battery 7 that, the infiltration length of the positive electrode 310 in each of the example battery 6 and the example battery 7 for the electrolyte 340 is longer than the infiltration length of the positive electrode 310 in the comparative battery for the electrolyte 340. The discharge DCR of each of the example battery 6 and the example battery 7 at 50% SOC is less than the discharge DCR of the comparative battery at 50% SOC. The charge DCR of each of the example battery 6 and the example battery 7 at 50% SOC is less than the charge DCR of the comparative battery at 50% SOC. In addition, the cycle energy efficiency after three cycles of each of the example battery 6 and the example battery 7 is higher than the cycle energy efficiency after three cycles of the comparative battery. The cycle capacity retention rate after two hundred cycles of each of the example battery 6 and the example battery 7 is higher than the cycle capacity retention rate after two hundred cycles of the comparative battery. The reasons lie below. The positive electrode 310 in each of the example battery 6 and the example battery 7 includes the electrolyte retention particles 100, each of the electrolyte retention particles 100 includes the core 110 and the shell 120, the shell 120 has multiple capillary pores 122, and each capillary pore 122 may be used to absorb the electrolyte 340 and the electrolyte 340 is stored in the core 110, so that the electrolyte retention particle 100 has good electrolyte retention performance. When the electrolyte retention particles 100 are applied to the positive electrode 310, the infiltrability of the positive electrode 310 for the electrolyte 340 is improved, and then the infiltration length of the positive electrode 310 for the electrolyte 340 is increased. Moreover, when the infiltrability of the positive electrode 310 for the electrolyte 340 is better, the effective contact area between the electrolyte 340 and the positive electrode 310 is larger, so that the impedance of the active ions in the battery 300 at the interface between the positive electrode 310 and the electrolyte 340 is reduced, and then the discharge DCR of each of the example battery 6 and the example battery 7 at 50% SOC is less than the discharge DCR of the comparative battery at 50% SOC, and the charge DCR of each of each of the example battery 6 and the example battery 7 at 50% SOC is less than the charge DCR of the comparative battery at 50% SOC. It is more conducive to charging and discharging processes of the battery 300, finally resulting in relatively high cycle energy efficiency and capacity retention rate of each of the example battery 6 and the example battery 7, and better cycle performance of each of the example battery 6 and the example battery 7 than the comparative battery.

Further, referring to example 7 and example 8, the positive electrode 310 and the negative electrode 330 in example 8 both include the electrolyte retention particles 100. Compared to an example in which either the positive electrode 310 or the negative electrode 330 is the electrode 200 provided in the present disclosure, the discharge DCR of the example battery 8 at 50% SOC is less than the discharge DCR of the example battery 7 at 50% SOC, the charge DCR of the example battery 8 at 50% SOC is less than the charge DCR of the example battery 7 at 50% SOC; and the cycle energy efficiency after three cycles of the example battery 8 is greater than the cycle energy efficiency after three cycles of the example battery 7, and the cycle capacity retention rate after two hundred cycles of the example battery 8 is greater than the cycle capacity retention rate after two hundred cycles of the example battery 7. The reasons lie below. Both the positive electrode 310 and the negative electrode 330 in the example battery 8 include the electrolyte retention particles 100, the mass fraction *A1* of the electrolyte retention particles 100 in the active layer 220 of the positive electrode 310 and the mass fraction *A2* of the electrolyte retention particles 100 in the active layer 220 of the negative electrode 330 are both in the reasonable range. The electrolyte retention particles 100 have good electrolyte retention performance, so that the positive electrode 310 and the negative electrode 330 both have good infiltrability for the electrolyte 340. Therefore, the impedance of active ions in the battery 300 at the interface between the positive electrode 310 and the electrolyte 340 is greatly reduced, and the impedance of the active ions in the battery 300 at the interface between the negative electrode 330 and the electrolyte 340 is greatly reduced, so that the example battery 8 has higher cycle performance and energy efficiency.

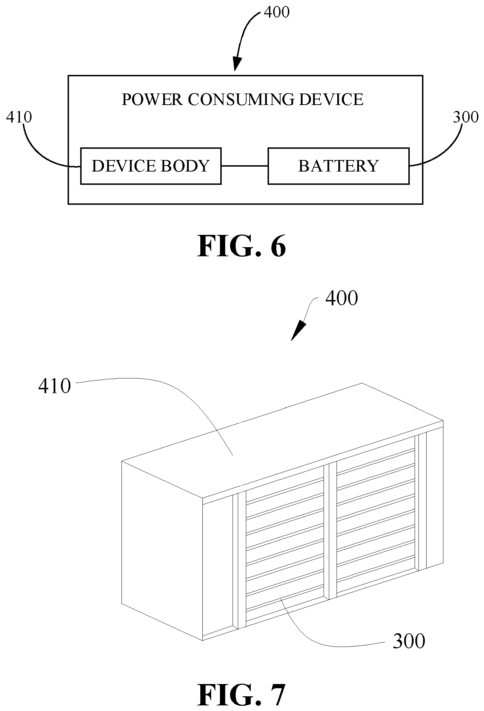

As illustrated in FIG. 6 and FIG. 7, a power consuming device 400 is provided in the present disclosure. The power consuming device 400 includes a device body 410 and the battery 300 provided in the present disclosure. The battery 300 is configured to supply power to the device body 410.

It may be understood that the battery 300 is electrically connected to the device body 410.

In this embodiment, the battery 300 has good cycle performance and high energy efficiency, so that the battery 300 has a long service life. When the battery 300 is used to supply power to the device body 410, the battery 300 can provide a stable power supply for the device body 410, so that the device body 410 operates normally.

Alternatively, the power consuming device 400 in embodiments of the present disclosure may be, but is not limited to, a portable electronic device, such as a mobile phone, a tablet computer, a laptop, a desktop computer, a smart bracelet, a smart watch, an e-book reader, and a game console. The power consuming device 400 may also be transportation means such as an automobile, a truck, a car, a van, a bullet train, a high-speed train, and an electric bicycle. In addition, the power consuming device 400 may also be various household appliances, etc. The power consuming device 400 in the embodiment of the present disclosure in FIG. 7 is an energy storage battery cabinet.

It may be understood that the power consuming device 400 described in this implementation is only a form of the power consuming device 400 to which the battery 300 is applied, and should not be understood as a limitation to the power consuming device 400 provided in the present disclosure, nor should it be understood as a limitation to the battery 300 provided in various implementations of the present disclosure.

## Claims

1. An electrode (200), comprising:
a current collector layer (210); and
an active layer (220), disposed on a surface of the current collector layer (210),
wherein:
the active layer (220) comprises active particles (500) and electrolyte retention particles (100);
each of the electrolyte retention particles (100) comprises a core (110) and a shell (120), wherein the core (110) is coated with the shell (120),
the shell (120) comprises a plurality of sub-particles (121), wherein each of the plurality of sub-particles (121) has capillary pores (122);
the core (110) is a polymer synthesized from one or more selected from a group consisting of acrylic, acrylate, acrylamide, acrylonitrile, butadiene, styrene, and vinylidene fluoride; and
a material of the shell (120) is selected from one of silane, silicon dioxide, silicate ester, and aluminium oxide.

2. The electrode (200) of claim 1, wherein each of the capillary pores (122) has a radial dimension d satisfying: 2 nm ≤ d ≤ 30 nm.

3. The electrode (200) of claim 1, wherein in the shell (120), the capillary pores (122) have a distribution density *a* satisfying: 0.4 cm³/g ≤ a ≤ 3 cm³/g.

4. The electrode (200) of claim 1, wherein each of the plurality of sub-particles (121) has a particle size *D1* satisfying: 50 nm ≤ *D1* ≤ 90 nm.

5. The electrode (200) of claim 1, wherein the core (110) has a diameter D2, and each of the electrolyte retention particles (100) has an outer diameter *D3, D2* and D3 satisfying: 1:3 ≤ *D2:D3* ≤ 1:1.2.

6. The electrode (200) of claim 5, wherein the diameter *D2* of the core (110) satisfies: 80 nm ≤ D2 ≤ 300 nm.

7. The electrode (200) of claim 1, wherein each of the electrolyte retention particles (100) has a specific surface area ranging from 85 m²/g to 350 m²/g.

8. A battery (300), comprising:
a positive electrode (310);
a separator (320), disposed at one side of the positive electrode (310);
a negative electrode (330), disposed at one side of the separator (320) positioned facing away from the positive electrode (310), wherein at least one of the positive electrode (310) or the negative electrode (330) is the electrode (200) of any one of claims 1 to 7; and
an electrolyte (340), wherein at least a part of the positive electrode (310) and at least a part of the negative electrode (330) are immersed in the electrolyte (340).

9. The battery (300) of claim 8, wherein the positive electrode (310) is the electrode (200) of any one of claims 1 to 7, and a mass fraction *A1* of the electrolyte retention particles (100) in the active layer (220) of the positive electrode (310) satisfies: 0.4% ≤ *A1* ≤ 1.2%.

10. The battery (300) of claim 8, wherein the negative electrode (330) is the electrode (300) of any one of claims 1 to 7, and a mass fraction A2 of the electrolyte retention particles (100) in the active layer (220) of the negative electrode (330) satisfies: 0.2% ≤ *A2* ≤ 0.8%.

11. The battery (300) of claim 8, wherein the positive electrode (310) comprises the current collector layer (210) and the active layer (220), the current collector layer (210) of the positive electrode (310) is selected from aluminium foil, and the active particles (500) of the positive electrode (310) are selected from one or more of lithium cobalt oxide, lithium nickel oxide, lithium manganese oxide, lithium nickel manganese oxide, lithium nickel cobalt manganese oxide, and lithium nickel cobalt aluminium oxide.

12. The battery (300) of claim 8, wherein the negative electrode (330) comprises the current collector layer (210) and the active layer (220), the current collector layer (210) of the negative electrode (330) is selected from copper foil, and the active particles (500) of the negative electrode (330) are selected from one or more of graphite, meso-carbon micro-bead, hard carbon, and soft carbon.

13. A power consuming device (400), comprising:
a device body (410); and
the battery (300) of any one of claims 8 to 12, wherein the battery (300) is configured to supply power to the device body (410).

## Patentansprüche

1. Elektrode (200), umfassend:
eine Stromabnehmerschicht (210); und
eine aktive Schicht (220), die auf einer Oberfläche der Stromabnehmerschicht (210) angeordnet ist,
wobei:
die aktive Schicht (220) aktive Partikel (500) und Elektrolyt-Retentionspartikel (100) umfasst;
jedes der Elektrolyt-Retentionspartikel (100) einen Kern (110) und eine Schale (120) umfasst, wobei der Kern (110) mit der Schale (120) beschichtet ist,
die Schale (120) eine Vielzahl von Teilpartikeln (121) umfasst, wobei jedes der Vielzahl von Teilpartikeln (121) Kapillarporen (122) aufweist;
der Kern (110) ein Polymer ist, das aus einem oder mehreren ausgewählten aus einer Gruppe bestehend aus Acryl, Acrylat, Acrylamid, Acrylnitril, Butadien, Styrol und Vinylidenfluorid synthetisiert wird; und
ein Material der Schale (120) aus einem von Silan, Siliziumdioxid, Silikatester und Aluminiumoxid ausgewählt ist.

2. Elektrode (200) nach Anspruch 1, wobei jede der Kapillarporen (122) eine radiale Abmessung d aufweist, die Folgendes erfüllt: 2 nm ≤ *d* ≤ 30 nm.

3. Elektrode (200) nach Anspruch 1, wobei in der Schale (120) die Kapillarporen (122) eine Verteilungsdichte a aufweisen, die Folgendes erfüllt: 0,4 cm³/g ≤ *a* ≤ 3 cm³/g.

4. Elektrode (200) nach Anspruch 1, wobei jedes der Vielzahl von Teilpartikeln (121) eine Partikelgröße *D1* aufweist, die Folgendes erfüllt: 50 nm ≤ *D1* ≤ 90 nm.

5. Elektrode (200) nach Anspruch 1, wobei der Kern (110) einen Durchmesser *D2* aufweist und jedes der Elektrolyt-Retentionspartikel (100) einen Außendurchmesser *D3, D2* und *D3* aufweist, der Folgendes erfüllt: 1:3 ≤ *D2: D3* ≤ 1:1,2.

6. Elektrode (200) nach Anspruch 5, wobei der Durchmesser *D2* des Kerns (110) Folgendes erfüllt: 80 nm ≤ *D2* ≤ 300 nm.

7. Elektrode (200) nach Anspruch 1, wobei jedes der Elektrolyt-Retentionspartikel (100) einen spezifischen Oberflächenbereich von 85 m²/g bis 350 m²/g aufweist.

8. Batterie (300), umfassend:
eine positive Elektrode (310);
einen Separator (320), der an einer Seite der positiven Elektrode (310) angeordnet ist;
eine negative Elektrode (330), die an einer Seite des Separators (320) angeordnet ist, die von der positiven Elektrode (310) weg gerichtet ist, wobei mindestens eine der positiven Elektrode (310) oder der negativen Elektrode (330) die Elektrode (200) nach einem der Ansprüche 1 bis 7 ist; und
einen Elektrolyten (340), wobei mindestens ein Teil der positiven Elektrode (310) und mindestens ein Teil der negativen Elektrode (330) in den Elektrolyten (340) eingetaucht sind.

9. Batterie (300) nach Anspruch 8, wobei die positive Elektrode (310) die Elektrode (200) nach einem der Ansprüche 1 bis 7 ist und ein Massenanteil *A1* der Elektrolyt-Retentionspartikel (100) in der aktiven Schicht (220) der positiven Elektrode (310) Folgendes erfüllt: 0,4 % ≤ *A1* ≤ 1,2 %.

10. Batterie (300) nach Anspruch 8, wobei die negative Elektrode (330) die Elektrode (300) nach einem der Ansprüche 1 bis 7 ist und ein Massenanteil *A2* der Elektrolyt-Retentionspartikel (100) in der aktiven Schicht (220) der negativen Elektrode (330) Folgendes erfüllt: 0,2 % ≤ *A2* ≤ 0,8 %.

11. Batterie (300) nach Anspruch 8, wobei die positive Elektrode (310) die Stromabnehmerschicht (210) und die aktive Schicht (220) umfasst, die Stromabnehmerschicht (210) der positiven Elektrode (310) aus Aluminiumfolie ausgewählt ist und die aktiven Partikel (500) der positiven Elektrode (310) aus einem oder mehreren von Lithiumkobaltoxid, Lithiumnickeloxid, Lithiummanganoxid, Lithiumnickelmanganoxid, Lithiumnickelkobaltmanganoxid, und Lithium-Nickel-Kobalt-Aluminiumoxid ausgewählt sind.

12. Batterie (300) nach Anspruch 8, wobei die negative Elektrode (330) die Stromabnehmerschicht (210) und die aktive Schicht (220) umfasst, die Stromabnehmerschicht (210) der negativen Elektrode (330) aus Kupferfolie ausgewählt ist und die aktiven Partikel (500) der negativen Elektrode (330) aus einem oder mehreren aus Graphit, Meso-Kohlenstoff-Mikrokügelchen, hartem Kohlenstoff und weichem Kohlenstoff ausgewählt sind.

13. Stromverbrauchsvorrichtung (400), umfassend:
einen Vorrichtungskörper (410); und
die Batterie (300) nach einem der Ansprüche 8 bis 12, wobei die Batterie (300) so konfiguriert ist, dass sie den Vorrichtungskörper (410) mit Strom versorgt.

## Revendications

1. Électrode (200), comportant :
une couche (210) de collecteur de courant ; et
une couche active (220), disposée sur une surface de la couche (210) de collecteur de courant,
dans laquelle :
la couche active (220) comporte des particules actives (500) et des particules de rétention d'électrolyte (100) ;
chacune des particules de rétention d'électrolyte (100) comporte un noyau (110) et une coque (120), dans laquelle le noyau (110) est recouvert par la coque (120),
la coque (120) comporte une pluralité de sous-particules (121), dans laquelle chacune de la pluralité de sous-particules (121) comporte des pores capillaires (122) ;
le noyau (110) est un polymère synthétisé à partir d'un ou de plusieurs sélectionnés dans un groupe consistant en acrylique, acrylate, acrylamide, acrylonitrile, butadiène, styrène et fluorure de vinylidène ; et
un matériau de la coque (120) est sélectionné parmi un silane, un dioxyde de silicium, un ester de silicate et un oxyde d'aluminium.

2. Électrode (200) selon la revendication 1, dans laquelle chacun des pores capillaires (122) présente une dimension radiale d satisfaisant : 2 nm ≤ *d* ≤ 30 nm.

3. Électrode (200) selon la revendication 1, dans laquelle dans la coque (120), les pores capillaires (122) présentent une masse volumique de distribution *a* satisfaisant : 0,4 cm³/g ≤ *a* ≤ 3 cm³/g.

4. Électrode (200) selon la revendication 1, dans laquelle chacune de la pluralité de sous-particules (121) présente une taille de particule *D1* satisfaisant : 50 nm ≤ *D1* ≤ 90 nm.

5. Électrode (200) selon la revendication 1, dans laquelle le noyau (110) présente un diamètre *D2*, et chacune des particules de rétention d'électrolyte (100) présente un diamètre externe *D3, D2* et *D3* satisfaisant : 1:3 ≤ *D2* : *D3* ≤ 1:1,2.

6. Électrode (200) selon la revendication 5, dans laquelle le diamètre *D2* du noyau (110) satisfait : 80 nm ≤ *D2* ≤ 300 nm.

7. Électrode (200) selon la revendication 1, dans laquelle chacune des particules de rétention d'électrolyte (100) présente une surface spécifique allant de 85 m²/g à 350 m²/g.

8. Batterie (300), comportant :
une électrode positive (310) ;
un séparateur (320), disposé sur un côté de l'électrode positive (310) ;
une électrode négative (330), disposée sur un côté du séparateur (320) positionné en regard de l'électrode positive (310), dans laquelle au moins l'une parmi l'électrode positive (310) ou l'électrode négative (330) est l'électrode (200) selon l'une quelconque des revendications 1 à 7 ; et
un électrolyte (340), dans laquelle au moins une partie de l'électrode positive (310) et au moins une partie de l'électrode négative (330) sont immergées dans l'électrolyte (340).

9. Batterie (300) selon la revendication 8, dans laquelle l'électrode positive (310) est l'électrode (200) selon l'une quelconque des revendications 1 à 7, et une fraction massique *A1* des particules de rétention d'électrolyte (100) dans la couche active (220) de l'électrode positive (310) satisfait : 0,4 % ≤ *A1* ≤ 1,2 %.

10. Batterie (300) selon la revendication 8, dans laquelle l'électrode négative (330) est l'électrode (300) selon l'une quelconque des revendications 1 à 7, et une fraction massique *A2* des particules de rétention d'électrolyte (100) dans la couche active (220) de l'électrode négative (330) satisfait : 0,2 % ≤ *A2* ≤ 0,8 %.

11. Batterie (300) selon la revendication 8, dans laquelle l'électrode positive (310) comporte la couche (210) de collecteur de courant et la couche active (220), la couche (210) de collecteur de courant de l'électrode positive (310) est sélectionnée parmi une feuille d'aluminium, et les particules actives (500) de l'électrode positive (310) sont sélectionnées parmi un ou plusieurs parmi un oxyde de lithium/cobalt, un oxyde de lithium/nickel, un oxyde de lithium/manganèse, un oxyde de lithium/nickel/manganèse, un oxyde de lithium/nickel/cobalt/manganèse, et un oxyde de lithium/nickel/cobalt/aluminium.

12. Batterie (300) selon la revendication 8, dans laquelle l'électrode négative (330) comporte la couche (210) de collecteur de courant et la couche active (220), la couche (210) de collecteur de courant de l'électrode négative (330) est sélectionnée parmi une feuille de cuivre, et les particules actives (500) de l'électrode négative (330) sont sélectionnées parmi un ou plusieurs parmi un graphite, une microbille de carbone méso, un carbone dur et un carbone mou.

13. Dispositif de consommation d'énergie (400), comportant :
un corps de dispositif (410) ; et
la batterie (300) selon l'une quelconque des revendications 8 à 12, dans lequel la batterie (300) est configurée pour alimenter en énergie le corps de dispositif (410).
